# EUROPÄISCHE PATENTSCHRIFT

(11) **EP 3 593 393 B1**
(45) Veröffentlichungstag und Bekanntmachung des Hinweises auf die Patenterteilung: **05.05.2021**
(21) Anmeldenummer: 18710831.1
(22) Anmeldetag: 09.03.2018
(51) Int. Cl.: H01M 8/0662, B01D 53/02

(54) **BRENNSTOFFZELLENSYSTEM UND VERFAHREN ZUM DURCHFÜHREN EINER THERMISCHEN REGENERATION VON ENTSCHWEFELUNGSADSORBATEN**
FUEL CELL SYSTEM AND METHOD FOR THERMAL REGENERATION OF DESULFURIZATION ADSORBANTS
SYSTÈME DE PILE À COMBUSTIBLE ET PROCÉDÉ DE RÉGÉNERATION THERMIQUE DES ADSORBATS DE DÉSULFURIZATION

(30) Priorität: 10.03.2017 AT 501922017
(43) Veröffentlichungstag der Anmeldung: 15.01.2020
(73) Patentinhaber: AVL List GmbH, 8020 Graz (AT)
(72) Erfinder: NEUBAUER, Raphael, 8010 Graz (AT)
(74) Vertreter: Wietzke, Andreas
(86) Internationale Anmeldenummer: PCT/EP2018/055864
(87) Internationale Veröffentlichungsnummer: WO 2018/162694

(56) Entgegenhaltungen:
- DE-A1- 10 130 776
- JP-B2- 3 455 991
- US-A1- 2015 270 559

## Beschreibung

Die vorliegende Erfindung betrifft ein Verfahren zum Durchführen einer thermischen Regeneration von Entschwefelungsadsorbaten, die aus einer adsorptiven Entschwefelung eines Kraftstoffs resultieren, im mobilen Einsatz, insbesondere in einem Brennstoffzellensystem eines Kraftfahrzeugs. Die Erfindung betrifft ferner ein Brennstoffzellensystem sowie ein Kraftfahrzeug mit dem Brennstoffzellensystem, in welchen ein solches Verfahren durchgeführt wird.

Im Stand der Technik sind verschiedene Vorrichtungen und Verfahren zum Entschwefeln von Kraftstoffen, insbesondere von flüssigen Kraftstoffen, in einem Brennstoffzellensystem bekannt. Grundsätzlich kann zwischen einer hydrierenden Entschwefelung und einer adsorptiven Entschwefelung unterschieden werden. Bei der stark verbreiteten hydrierenden Entschwefelung findet die Entschwefelung bei deutlich höheren Temperaturen als bei der adsorptiven Entschwefelung statt.

Aus der EP 2 985 830 A1 ist ein Brennstoffzellensystem bekannt, in welchem eine hydrierende Entschwefelung durchgeführt wird. Im Rahmen der hydrierenden Entschwefelung wird Kathodenabgas in einem Wärmetauscher einer Entschwefelungseinheit eingeleitet. Zusätzlich wird zur Einleitung von Wärme und Wasserstoff Anodenabgas direkt einem Entschwefelungskatalysator zugeführt. Hierfür ist eine separate Wasserstoffzuführeinheit bereitgestellt. Gemäß EP 2 985 830 A1 wird Schwefel in einem katalytischen Prozess mittels Wärme aus Rohmaterial aufgespalten und mit Wasserstoff und Anodenabgas zu Schwefelwasserstoff verbunden und adsorbiert.

Die dargestellte hydrierende Entschwefelung ist allerdings nur für stationäre Anwendungen günstig anzuwenden, da sie lange Verweildauern, hohe Temperaturen und hohe Drücke benötigt.

Für mobile Anwendungen könnte deshalb eine adsorptive Entschwefelung in Frage kommen. Bei bekannten adsorptiven Entschwefelungen sind allerdings Regenerationsmaßnahmen nötig, die auf Lösungsmittel oder thermische Regenerierung zurückgreifen, welche in mobilen Anwendungen schwierig umzusetzen sind und zu einem komplexen Systemaufbau sowie entsprechend hohen Kosten führen JP3455991 beschreibt ein Brennstoffzellensystem mit einem einem Adsorber zur adsorptiven Entschwefelung von Kraftstoff. Der Adsorber steht mit dem Anodenabschnitt mittels einer Regenerationsfluidleitung in Fluidverbindung, wobei durch die Regenerationsfluidleitung erhitztes Fluid von Anodenabschnitt zum Adsorber förderbar ist.

DE10130776 offenbart eine Brennstoffzelle die mittels einer Regenerationsfluidleitung mit dem Kathodenabschnitt der Brennstoffzelle in Fluidverbindung steht.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Brennstoffzellensystem, ein Verfahren sowie ein Kraftfahrzeug zur Verfügung zu stellen, mittels welcher eine Entschwefelung für Kraftstoffe in einem Brennstoffzellensystem auf einfache, platzsparende, effiziente und entsprechend kostengünstige Weise in mobilen Anwendungen umsetzbar ist.

Die voranstehende Aufgabe wird durch die Patentansprüche gelöst. Insbesondere wird die voranstehende Aufgabe durch das Brennstoffzellensystem gemäß Anspruch 1, das Verfahren gemäß Anspruch 8 sowie das Kraftfahrzeug gemäß Anspruch 15 gelöst. Weitere Vorteile der Erfindung ergeben sich aus den Unteransprüchen, der Beschreibung und den Zeichnungen. Dabei gelten Merkmale und Details, die im Zusammenhang mit dem Brennstoffzellensystem beschrieben sind, selbstverständlich auch im Zusammenhang mit dem erfindungsgemäßen Verfahren, dem erfindungsgemäßen Kraftfahrzeug und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung wird ein Brennstoffzellensystem zur Verfügung gestellt. Das Brennstoffzellensystem weist einen Brennstoffzellenstapel mit einem Anodenabschnitt und einem Kathodenabschnitt auf. Das Brennstoffzellensystem weist ferner einen Reformer zum Reformieren von Kraftstoff zur Verwendung im Anodenabschnitt des Brennstoffzellenstapels auf. Außerdem weist das Brennstoffzellensystem einen Kraftstofftank zum Bereitstellen des Kraftstoffs für den Reformer auf, wobei stromabwärts des Kraftstofftanks und stromaufwärts des Reformers eine Entschwefelungseinheit mit einem Adsorber zur adsorptiven Entschwefelung von Kraftstoff, der vom Kraftstofftank über die Entschwefelungseinheit zum Reformer geleitet wird, angeordnet ist. Der Adsorber steht mit Anoden- und Kathodenabschnitt und/oder einer Brennkraftmaschine des Brennstoffzellensystems mittels einer Regenerationsfluidleitung in Fluidverbindung, wobei durch die Regenerationsfluidleitung erhitztes Fluid von Anoden- und Kathodenabschnitt und/oder von der Brennkraftmaschine zum Adsorber förderbar ist.

In einer weiteren Ausführungsform der vorliegenden Erfindung steht der Adsorber mit Anoden- und Kathodenabschnitt über wenigstens eine durch das Brennstoffzellensystem betriebene Hilfeleistungseinheit mittels einer Regenerationsfluidleitung in Fluidverbindung, wobei durch die Regenerationsfluidleitung erhitztes Fluid von Anoden- und Kathodenabschnitt über die Hilfsleistungseinheit zum Adsorber förderbar ist.

Dadurch, dass durch die Regenerationsfluidleitung auf die vorstehend dargestellte Weise erhitztes Fluid von der Hilfsleistungseinheit und/oder von der Brennkraftmaschine (z.B. bei der Anwendung des Brennstoffzellensystems inkl. Brennkraftmaschine in einem Hybridfahrzeug) zum Adsorber förderbar ist, können der Adsorber bzw. das Adsorptionsmittel im Adsorber mit Wärmeenergie erhitzt werden, die im Brennstoffzellensystem ohnehin anfällt. Auf diese Weise lassen sich der Adsorber und das darin befindliche Adsorptionsmittel entsprechend effizient erhitzen und thermisch regenerieren. Da auf zusätzliche Hilfsmittel wie elektrische Widerstandsheizvorrichtungen verzichtet werden kann, kann das Brennstoffzellensystem auch besonders platzsparend zur Verfügung gestellt werden. Unter Verwendung des erfindungsgemäßen Brennstoffzellensystems lässt sich somit auch die adsorptive Entschwefelung, für welche die anschließende Regeneration von entscheidender Bedeutung ist, auf effiziente und entsprechend kostengünstige Weise durchführen.

Unter Verwendung der vorliegenden Erfindung können Brennstoffzellensysteme in mobilen Anwendungen grundsätzlich mit beliebigen Kraftstoffen bzw. Brennstoffen betrieben werden, da deren Schwefelkomponenten, welche alle BrennstoffzellenSysteme, auch die gegenüber Schwefelverbindungen besonders tolerante SOFC-Variante ("Solid Oxide Fuel Cell"), praktisch umgehend zerstören würden, effizient und effektiv entfernt werden können.

Unter dem Kraftstoff ist Kraftstoff bzw. Brennstoff zu verstehen, welcher in reformierter Form dem Anodenabschnitt des Brennstoffzellenstapels zugeführt wird, um dort im Rahmen einer chemischen Reaktion elektrische Energie zu erzeugen. Entsprechend kann unter der Verwendung des Kraftstoffs im Anodenabschnitt eine Verwendung dort zur Erzeugung elektrischer Energie mittels des Brennstoffzellenstapels verstanden werden. Der Kraftstoff wird hierfür vorzugsweise in flüssiger Form im Kraftstofftank bereitgestellt. Demnach ist die Entschwefelungsvorrichtung zum Entschwefeln von insbesondere flüssigen Kraftstoffen geeignet.

In einer Variante der Erfindung ist das Brennstoffzellensystem insbesondere als SOFC-System ausgestaltet. Bei einer Ausführungsform, bei welcher der Adsorber mit der Brennkraftmaschine des Brennstoffzellensystems in Fluidverbindung steht, kann wie weiter oben erwähnt das Brennstoffzellensystem in Form eines Hybridsystems für ein Hybridelektrofahrzeug ausgestaltet sein. Unter dem erhitzten Fluid von der Brennkraftmaschine ist vorzugsweise Abgas der Brennkraftmaschine zu verstehen, das bezüglich eines Brennstoffzellensystems bisher meist ungenutzt in die Umgebung des Hybridelektrofahrzeugs ausgestoßen wurde. Durch die erfindungsgemäße Rückführung des Abgases der Brennkraftmaschine in die Entschwefelungseinheit bzw. den Adsorber kann diese ohnehin vorhandene Wärmequelle, wie vorstehend bereits mit Bezug auf erhitztes Fluid der Hilfsleistungseinheit beschrieben, genutzt werden, um den Adsorber bzw. das Adsorptionsmittel im Adsorber effizient und entsprechend kostensparend zu regenerieren.

Durch die Regenerationsfluidleitung ist das erhitzte Fluid zu, insbesondere in, den Adsorber leitbar, wodurch der Adsorber und das Adsorptionsmittel im Adsorber für die thermische Regeneration von Entschwefelungsadsorbaten erhitzbar sind. Durch das Leiten bzw. Fördern des erhitzten Fluids in den Adsorber kann ein besonders effizienter Wärmeeintrag in das Adsorptionsmittel im Adsorber realisiert werden. Weiterhin können auf diese Weise Entschwefelungsadsorbate effizient aus dem Adsorber abtransportiert werden.

Die erfindungswesentlichen Merkmale des vorliegenden Brennstoffzellensystems lassen sich außerdem auf besonders einfache Weise in herkömmlichen Brennstoffzellensystemen nachrüsten. Hierfür müssen im bestehenden Brennstoffzellensystem lediglich die Regenerationsfluidleitung von Anoden- und Kathodenabschnitt und/oder von der wenigstens einen Hilfsleistungseinheit und/oder von der Brennkraftmaschine zum Adsorber geführt werden und die dafür nötigen Anschlüsse an den jeweiligen Komponenten bereitgestellt werden. Dies kann auf kostengünstige und platzsparende Weise umgesetzt werden.

Als Adsorptionsmittel wird vorliegend bevorzugt Ag-Al₂O₃ verwendet. Bei umfangreichen Versuchen im Rahmen der vorliegenden Erfindung hat sich herausgestellt, dass sich dieses Adsorptionsmittel im vorliegenden Brennstoffzellensystem vorteilhaft verwenden lässt und beispielsweise für die Adsorption von Benzothiophen (BT), Dibenzothiophen (DBT) und deren Derivate besonders gut geeignet ist.

Die Regenerationsfluidleitung kann mehrere Fluidverbindungsabschnitte aufweisen. Die Fluidverbindungsabschnitte können sich kreuzen und/oder mittels Ventilen geschaltet und/oder voneinander getrennt sein. Die Fluidverbindungsabschnitte können ferner durch eine oder mehrere Funktionseinheiten, beispielsweise die wenigstens eine durch das Brennstoffzellensystem betriebene Hilfsleistungseinheit, voneinander getrennt sein.

Unter der wenigstens einen durch das Brennstoffzellensystem betriebenen oder betreibbaren Hilfsleistungseinheit ist eine Funktionseinheit des Brennstoffzellensystems zu verstehen, welche vorzugsweise erst durch den Betrieb des Brennstoffzellensystems aktiviert oder vollständig aktiviert wird.

Gemäß einer Weiterbildung der vorliegenden Erfindung ist es möglich, dass bei einem Brennstoffzellensystem die Hilfsleistungseinheit einen Abgasbrenner aufweist, der zum Erhitzen des Reformers an diesem angeordnet ist, wobei der Abgasbrenner, insbesondere eine erste Abgasbrennereinheit, mit dem Adsorber mittels der Regenerationsfluidleitung in Fluidverbindung steht. Im Rahmen von Versuchen bei der Entwicklung der vorliegenden Erfindung hat sich herausgestellt, dass insbesondere erhitztes Fluid aus dem Abgasbrenner geeignet ist, das Adsorptionsmittel im Adsorber effizient und hinsichtlich einer chemischen Reaktion mit dem Adsorptionsmittel sicher zu erhitzen und zu regenerieren. Der Abgasbrenner ist vorzugsweise ringförmig um den Reformer herum angeordnet, wobei er in einer Variante der Erfindung eine erste Abgasbrennereinheit und eine zweite Abgasbrennereinheit aufweist, die strömungstechnisch voneinander getrennt sind und z.B. beide halbringförmig ausgeführt sein können. Dadurch lässt sich der Reformer über eine möglichst große Kontaktfläche erhitzen. Außerdem kann der Abgasbrenner dadurch auf platzsparende Weise mit möglichst großem Volumen im Brennstoffzellensystem bereitgestellt werden. Dies führt wiederum dazu, dass eine möglichst große Menge an erhitztem Fluid bereitgestellt und entsprechend zum Erhitzen und Regenerieren des Adsorptionsmittels im Adsorber genutzt werden kann. Zwischen dem Abgasbrenner und dem Adsorber kann außerdem auf besonders einfache und platzsparende Weise eine Fluidverbindung hergestellt werden.

Ferner ist es bei einem erfindungsgemäßen Brennstoffzellensystem möglich, dass der Abgasbrenner, insbesondere eine erste Abgasbrennereinheit, mit einem Fluidauslass des Kathodenabschnitts, zum Fördern von kathodenseitigem Abgas in den Abgasbrenner, mittels der Regenerationsfluidleitung in Fluidverbindung steht. Unter dem Abgasbrenner ist demnach ein Abgasbrenner zum zumindest teilweisen Umsetzen von Kathodenabgas, das vom Kathodenabschnitt zum Abgasbrenner gefördert wird, insbesondere durch Anreichern mit Anodenabgas zu verstehen. Der Abgasbrenner weist hierzu vorzugsweise einen Katalysator auf, mittels welchem das Kathodenabgas verbrannt, vorzugsweise flammenlos verbrannt, und entsprechend erhitzt werden kann. Im oder am Abgasbrenner kann ferner ein Startbrenner angeordnet sein, durch welchen der Abgasbrenner und somit auch Abgas, dass durch diesen strömt, insbesondere bei einem Startvorgang des Brennstoffzellensystems, erhitzt werden kann. Durch Verwendung des Kathodenabgases kann ein bereits erhitztes Fluid genutzt werden, welches im Abgasbrenner weiter erhitzt wird. Dadurch kann das Adsorptionsmittel im Adsorber entsprechend effizient regeneriert werden.

Außerdem kann es bei einem Brennstoffzellensystem gemäß der vorliegenden Erfindung von Vorteil sein, wenn der Adsorber mit einem Fluidauslass des Anodenabschnitts, zum Fördern von anodenseitigem Abgas in den Adsorber, mittels der Regenerationsfluidleitung, vorzugsweise der Regenerationsfluidleitung und der Anodenregenerationsfluidleitung, in Fluidverbindung steht. Dadurch ist es möglich, dem Adsorber anodenseitiges Abgas bzw. Anodenabgas zuzuführen, falls Adsorptionsmittel verwendet wird, welches nicht in sauerstoffhaltiger Atmosphäre aktiv ist und deshalb in reduzierter Umgebung aktiviert werden müsste. Durch die erfindungsgemäße Ausgestaltung der Regenerationsfluidleitung lässt sich damit eine hohe Flexibilität bei der Verwendung von Adsorptionsmitteln schaffen, wodurch auch das Brennstoffzellensystem entsprechend flexibel einsetzbar ist. Auf komplexe Zusatzbauteile, die außerdem entsprechend Platz im Brennstoffzellensystem benötigen, kann verzichtet werden.

Weiterhin ist es möglich, dass bei einem erfindungsgemäßen Brennstoffzellensystem in der Regenerationsfluidleitung stromabwärts der Hilfsleistungseinheit und/oder der Brennkraftmaschine und stromaufwärts des Adsorbers eine Befeuchtungseinheit zum Befeuchten des erhitzten Fluids, das zum Adsorber gefördert wird, angeordnet ist. Bei Versuchen im Rahmen der vorliegenden Erfindung hat sich herausgestellt, dass sich verwendetes Abgas von einer Hilfsleistungseinheit, insbesondere vom Abgasbrenner, positiv auf die Regeneration der Entschwefelungsadsorbate auswirkt. Allgemein wurde festgestellt, dass die Abgaszusammensetzung einen überraschend großen Einfluss auf die Regenerationsleistung ausübt. Beispielsweise wurde bei einem Test mit Benzothiophen ermittelt, dass der Schwefelgehalt von regenerierten Entschwefelungsadsorbaten von 1,3 mg/g (bei der herkömmlichen Verwendung von Luft) auf 0,9 mg/g gesenkt werden konnte. Dieses Phänomen wurde bei verschiedenen Tests festgestellt. Anhand dieser Erkenntnis wurde herausgefunden, dass der erhöhte Wassergehalt im Abgas der Hilfsleistungseinheit zu diesem Effekt führt. Diese Erkenntnis konnte durch weitere Versuche bestätigt werden. Entsprechend kann durch die Hinzugabe von Wasser bzw. Wasserdampf zu dem erhitzten Fluid ein positiver Effekt bei der Regeneration der Entschwefelungsadsorbate herbeigeführt werden. Die erfindungsgemäße Befeuchtungseinheit kann diesen Effekt entsprechend gezielt hervorrufen bzw. beeinflussen. Weiterhin kann durch die Steigerung des Wasseranteils im erhitzten Abgas ein gesteigerter Wärmeeintrag im Adsorber erzielt werden.

Bei einem Brennstoffzellensystem gemäß der vorliegenden Erfindung kann es weiterhin von Vorteil sein, wenn in der Regenerationsfluidleitung stromabwärts der Hilfsleistungseinheit und/oder der Brennkraftmaschine, sowie insbesondere stromabwärts der Befeuchtungseinheit, und stromaufwärts des Adsorbers ein Zusatzbrenner zum weiteren Erhitzen des erhitzten Fluids, das zum Adsorber gefördert wird, angeordnet ist. Der Zusatzbrenner kann als Notfalllösung zum Gewährleisten einer ausreichenden Erhitzung des Fluids und somit des Adsorptionsmittels verstanden werden. Die Regeneration der Entschwefelungsadsorbate kann dadurch entsprechend zuverlässig betrieben werden.

Darüber hinaus hat sich herausgestellt, dass es bei einem erfindungsgemäßen Brennstoffzellensystem von Vorteil sein kann, wenn die Hilfsleistungseinheit, insbesondere eine zweite Abgasbrennereinheit, in einer Abgasfluidleitung zum Auslassen von Abgas des Adsorbers in die Umgebung des Brennstoffzellensystems stromabwärts des Adsorbers angeordnet ist. Durch eine solche Anordnung können Entschwefelungsadsorbate besonders einfach abtransportiert und in der Hilfsleistungseinheit weiter behandelt werden. Vorzugsweise weist die Hilfsleistungseinheit einen Abgasbrenner auf, der ringförmig um den Reformer herum angeordnet ist, wobei der Abgasbrenner in einer Variante der Erfindung mit einer ersten Abgasbrennereinheit und einer zweiten Abgasbrennereinheit ausgeführt ist, die strömungstechnisch voneinander getrennt sind und z.B. beide halbringförmig ausgeführt sein können. Dabei steht der Abgasbrenner, insbesondere die erste Abgasbrennereinheit, mit einem Adsorbereingang des Adsorbers über die Regenerationsfluidleitung in Fluidverbindung und insbesondere die zweite Abgasbrennereinheit mit einem Adsorberausgang des Adsorbers über die Abgasfluidleitung in Fluidverbindung. Damit ist die Abgasbrennereinheit vor der Entschwefelungseinheit strömungstechnisch von der Abgasbrennereinheit nach der Entschwefelungseinheit getrennt. Dies führt zu einer vorteilhaft kompakten Bauweise des Brennstoffzellensystems.

Gemäß eines weiteren Aspekts der vorliegenden Erfindung wird ein Verfahren zum Durchführen einer thermischen Regeneration von Entschwefelungsadsorbaten, die aus einer adsorptiven Entschwefelung eines Kraftstoffs resultieren, in einem wie vorstehend beschriebenen Brennstoffzellensystem zur Verfügung gestellt. Der Adsorber steht, wie vorstehend beschrieben, mit Anoden- und Kathodenabschnitt und/oder einer Brennkraftmaschine des Brennstoffzellensystems mittels einer Regenerationsfluidleitung in Fluidverbindung. Zur thermischen Regeneration der Entschwefelungsadsorbate wird durch die Regenerationsfluidleitung erhitztes Fluid von Anoden- und Kathodenabschnitt und/oder von der Brennkraftmaschine, zum Aufheizen des Adsorbers, zum Adsorber gefördert.

In einer weiteren Ausführungsform des Verfahrens steht der Adsorber mit Anoden- und Kathodenabschnitt über wenigstens eine durch das Brennstoffzellensystem betriebene Hilfeleistungseinheit mittels einer Regenerationsfluidleitung in Fluidverbindung, wobei, zur thermischen Regeneration der Entschwefelungsadsorbate, durch die Regenerationsfluidleitung erhitztes Fluid von Anoden- und Kathodenabschnitt über die Hilfsleistungseinheit zum Adsorber gefördert wird.

Damit bringt ein erfindungsgemäßes Verfahren die gleichen Vorteile mit sich, wie sie ausführlich mit Bezug auf das erfindungsgemäße Brennstoffzellensystem beschrieben worden sind. Bei umfangreichen Versuchen im Rahmen der Erfindung hat sich herausgestellt, dass Ag-Al₂O₃ als Adsorptionsmittel für die adsorptive Entschwefelung besonders geeignet ist. Entsprechend wird bei dem Verfahren vorzugsweise Ag-Al₂O₃ verwendet. Durch die vorstehend beschriebene Verwendung des ohnehin im Brennstoffzellensystem vorhandenen erhitzten Fluids kann eine vollständige Regeneration von Ag-Al₂O₃ auf effiziente Weise realisiert werden. Beispielsweise kann auf effiziente Weise eine volle thermische Regeneration von Ag-Al₂O₃ nach einer Adsorption von Benzothiophen (BT), Dibenzothiophen (DBT) oder deren Derivaten ermöglicht werden.

Gemäß eines weiteren Aspekts der vorliegenden Erfindung weist die Hilfsleistungseinheit einen Abgasbrenner auf, der zum Erhitzen des Reformers an diesem angeordnet ist, wobei der Abgasbrenner, insbesondere eine erste Abgasbrennereinheit, mit dem Adsorber mittels der Regenerationsfluidleitung in Fluidverbindung steht und, zur thermischen Regeneration der Entschwefelungsadsorbate, durch die Regenerationsfluidleitung erhitztes Fluid vom Abgasbrenner zum Adsorber gefördert wird. Wie schon beschrieben ist der Abgasbrenner in einer Variante der Erfindung mit einer ersten Abgasbrennereinheit und einer zweiten Abgasbrennereinheit ausgeführt, die strömungstechnisch voneinander getrennt sind und z.B. beide halbringförmig ausgeführt sein können. Damit lassen sich die bereits vorstehend zum entsprechenden Vorrichtungsmerkmal beschriebenen Vorteile erzielen.

Weiterhin ist es möglich, dass bei einem erfindungsgemäßen Verfahren der Adsorber mit einem Fluidauslass des Anodenabschnitts, zum Fördern von anodenseitigem Abgas in den Adsorber, mittels der Regenerationsfluidleitung in Fluidverbindung steht, wobei ein Aktivitätswert für die Aktivität eines Adorptionsmittels im Adsorber in sauerstoffhaltiger Atmosphäre ermittelt wird und wenn festgestellt wird, dass der Aktivitätswert unter einem vordefinierten Schwellenwert liegt, im Rahmen der thermischen Regeneration der Entschwefelungsadsorbate durch die Regenerationsfluidleitung anodenseitiges Abgas - z.B. über den Abgasbrenner - in den Adsorber gefördert wird. Um die reduzierende Wirkung des Anodenabgases besonders gut ausnutzen zu können ist es von Vorteil, wenn es direkt in den Adsorber gefördert wird. Dadurch kann ein zuverlässiger Betrieb des Brennstoffzellensystems bzw. eine zuverlässige Regeneration der Entschwefelungsadsorbate auch bei der Verwendung von verschiedenen schwefelhaltigen Kraftstoffen gewährleistet werden. Der Aktivierungswert kann mit einem geeigneten Sensor, insbesondere mit einem geeigneten Stoffsensor zum Erkennen der Stoffzusammensetzung des Adsorptionsmittels, ermittelt werden.

Gemäß einer weiteren Variante der vorliegenden Erfindung ist es möglich, dass bei einem Verfahren stromabwärts der Hilfsleistungseinheit und/oder der Brennkraftmaschine und stromaufwärts des Adsorbers eine Befeuchtungseinheit angeordnet ist, wobei das erhitzte Fluid stromaufwärts des Adsorbers mittels der Befeuchtungseinheit befeuchtet wird, bevor es in den Adsorber gefördert wird. Wie vorstehend dargestellt, hat sich auf überraschende Weise gezeigt, dass erhitztes Fluid mit einem definierten hohen Feuchtigkeitsgehalt die Effektivität bei der Regeneration der Entschwefelungsadsorbate deutlich steigern kann. Hierbei kann es von weiterem Vorteil sein, wenn, beispielsweise mittels eines geeigneten Feuchtigkeitssensors, der Feuchtigkeitsgehalt im erhitzten Fluid ermittelt wird und das erhitzte Fluid durch die Befeuchtungseinheit befeuchtet wird, wenn der ermittelte Feuchtigkeitsgehalt unter einem vordefinierten Schwellenwert liegt. Hierbei kann der Feuchtigkeitsgehalt des erhitzten Fluids vorteilhafter Weise auch auf einen vordefinierten Feuchtigkeitsgehalt eingestellt werden. Dadurch kann gezielt die gewünschte Regenerationswirkung erzielt werden. Bei Versuchen im Rahmen der vorliegenden Erfindung hat sich weiterhin herausgestellt, dass durch ein entsprechend feuchtes bzw. befeuchtetes erhitztes Fluid die gewünschte thermische Regeneration bei besonders niedrigen Temperaturen durchgeführt werden kann. Durch einen erhöhten Feuchtigkeitsgrad des erhitzten Fluids konnte die für die Regeneration erforderliche Betriebstemperatur von ca. 525 °C beispielsweise auf ca. 450 °C reduziert werden. Dadurch kann die Regeneration der Entschwefelungsadsorbate noch effizienter durchgeführt werden.

Von weiterem Vorteil kann es sein, wenn bei einem erfindungsgemäßen Verfahren stromabwärts der Hilfsleistungseinheit und/oder der Brennkraftmaschine, sowie insbesondere stromabwärts der Befeuchtungseinheit, und stromaufwärts des Adsorbers ein Zusatzbrenner angeordnet ist, wobei in der Regenerationsfluidleitung stromaufwärts des Adsorbers die Temperatur des erhitzten Fluids ermittelt wird und wenn festgestellt wird, dass die ermittelte Temperatur des erhitzten Fluids unter einem vordefinierten Schwellenwert liegt, das erhitzte Fluid stromaufwärts des Adsorbers mittels des Zusatzbrenners weiter erhitzt wird, bevor es in den Adsorber gefördert wird. Dadurch kann gewährleistet werden, dass das erhitzte Fluid am und/oder im Adsorber stets die gewünschte hohe Temperatur erreicht. Die Temperatur kann durch wenigstens einen Temperatursensor ermittelt werden. Der wenigstens eine Temperatursensor kann in der Regenerationsfluidleitung und/oder in einer Hilfsleistungseinheit angeordnet sein. Weiterhin ist es möglich, dass Abgas von der Brennkraftmaschine mit Umgebungsluft gemischt wird, um die Temperatur des erhitzten Fluids bzw. die Regenerationstemperatur am und/oder im Adsorber entsprechend anzupassen. Wird beispielsweise festgestellt, dass die Temperatur des erhitzten Fluids zu hoch ist, kann das erhitzte Fluid mit Umgebungsluft gemischt werden. Dadurch kann auf einfache, kostengünstige und platzsparende Weise eine Temperaturregulierung des erhitzten Fluids realisiert werden.

Außerdem ist es möglich, dass bei einem Verfahren gemäß der vorliegenden Erfindung im Rahmen der thermischen Regeneration der Entschwefelungsadsorbate folgende Schritte durchgeführt werden:
- Erhitzen von Adsorptionsmittel im Adsorber mittels erhitztem Fluid von von Anoden- und Kathodenabschnitt (5b) und/oder der Hilfsleistungseinheit und/oder von der Brennkraftmaschine auf eine erste Temperatur,
- Zersetzen von adsorbierten Komponenten des Kraftstoffs und Verdampfung der zersetzten Komponenten bei einer zweiten Temperatur, die höher als die erste Temperatur ist,
- Zersetzen von Zwischenprodukten und Regeneration des Adsorptionsmittels bei einer dritten Temperatur, die höher als die zweite Temperatur ist, und
- Kühlen des Adsorptionsmittels und/oder des Adsorbers auf eine vierte Temperatur, die niedriger als die erste Temperatur ist.

Dieses Vorgehen hat sich bei Versuchen im Rahmen der vorliegenden Erfindung als besonders wirksam herausgestellt. Das Erhitzen auf die dritte Temperatur mittels der erfindungsgemäßen Verwendung des erhitzten Fluids ist von entsprechendem Vorteil. Das Kühlen des Adsorptionsmittels wird vorzugsweise mittels Luft durchgeführt, mittels welcher der Adsorber gespült wird. Dies ist besonders kostengünstig realisierbar. Das Spülen mittels Luft wird vorzugsweise unter Verwendung eines Gebläses durchgeführt.

Bei einem erfindungsgemäßen Verfahren kann es von Vorteil sein, wenn die erste Temperatur in einem Bereich zwischen 100°C und 350°C liegt, insbesondere in einem Bereich zwischen ca. 150°C und ca. 300°C liegt, die zweite Temperatur in einem Bereich zwischen 350°C und 450°C liegt, insbesondere in einem Bereich zwischen ca. 420°C und ca. 440°C liegt, und/oder die dritte Temperatur in einem Bereich zwischen 450°C und 550°C liegt, insbesondere in einem Bereich zwischen ca. 480°C und ca. 530°C liegt. Mit diesen Werten konnten nach umfangreichen Versuchen die besten Ergebnisse hinsichtlich einer effektiven Regeneration der Entschwefelungsadsorbate erzielt werden. Bei der dritten Temperatur hat sich herausgestellt, dass diese vorzugsweise in einem Bereich zwischen 450°C und 530°C, besonders vorzugsweise 500°C, und 530°C liegt. Bei gezielter Befeuchtung des erhitzten Fluids, wie es vorstehend ausführlich beschrieben wurde, liegt die dritte Temperatur vorzugsweise in einem Bereich zwischen 450°C und 460°C.

Gemäß eines weiteren Aspekts der vorliegenden Erfindung wird ein Kraftfahrzeug mit einem wie vorstehend im Detail beschriebenen Brennstoffzellensystem zur Verfügung gestellt, das zum Durchführen eines wie vorstehend im Detail beschriebenen Verfahrens konfiguriert und ausgestaltet ist. Damit bringt auch das erfindungsgemäße Kraftfahrzeug die gleichen Vorteile mit sich, wie sie vorstehend ausführlich mit Bezug auf das erfindungsgemäße Brennstoffzellensystem sowie das erfindungsgemäße Verfahren beschrieben worden sind. Bei Verwendung der Brennkraftmaschine ist das Fahrzeug vorzugsweise als Hybridelektrofahrzeug ausgestaltet.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: ein Blockdiagramm zum Darstellen eines Brennstoffzellensystems gemäß einer ersten Ausführungsform der vorliegenden Erfindung,
- Figur 2: ein Blockdiagramm zum Darstellen eines Brennstoffzellensystems gemäß einer zweiten Ausführungsform der vorliegenden Erfindung,
- Figur 3: ein Blockdiagramm zum Darstellen eines Brennstoffzellensystems gemäß einer dritten Ausführungsform der vorliegenden Erfindung,
- Figur 4: ein Ablaufdiagramm zum Erläutern eines Verfahrens gemäß einer erfindungsgemäßen Ausführungsform.
- Figur 5: ein Zeitdiagramm zum Erläutern eines Verfahrens gemäß einer erfindungsgemäßen Ausführungsform.

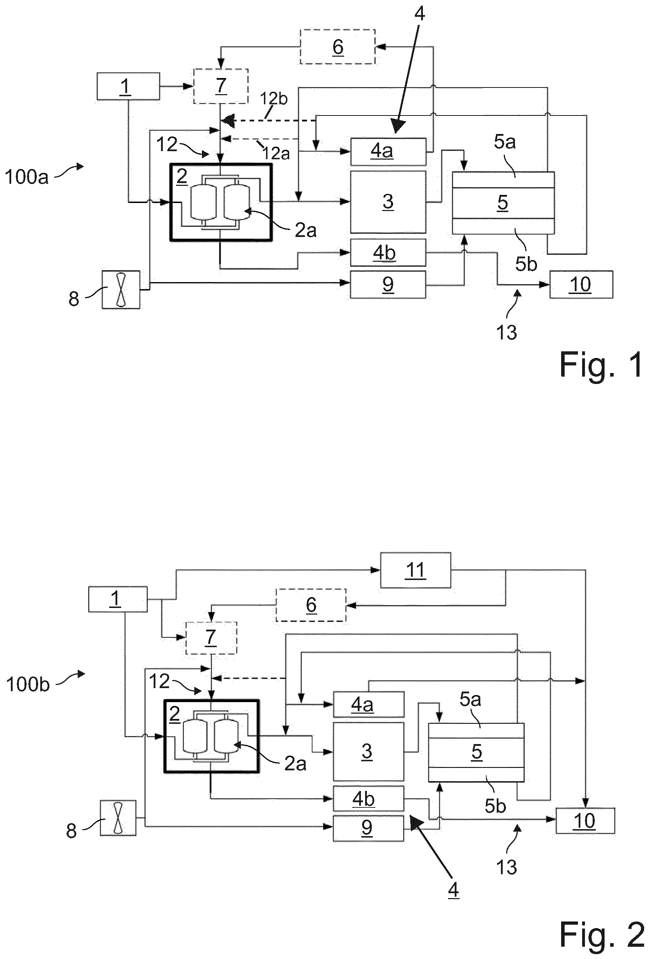

Elemente mit gleicher Funktion und Wirkungsweise sind in den Figuren 1 bis 5 jeweils mit denselben Bezugszeichen versehen.

In Fig. 1 ist schematisch ein Brennstoffzellensystem 100a gemäß einer ersten Ausführungsform dargestellt. Das Brennstoffzellensystem 100a weist einen Brennstoffzellenstapel 5 mit einem Anodenabschnitt 5a und einem Kathodenabschnitt 5b auf. Das Brennstoffzellensystem 100a weist ferner einen Reformer 3 zum Reformieren von Kraftstoff zur Verwendung im Anodenabschnitt 5a des Brennstoffzellenstapels 5 auf. Außerdem weist das Brennstoffzellensystem 100a einen Kraftstofftank 1 zum Bereitstellen des Kraftstoffs für den Reformer 3 dar. Stromabwärts des Kraftstofftanks 1 und stromaufwärts des Reformers 3 ist eine Entschwefelungseinheit 2 mit einem Adsorber 2a zur adsorptiven Entschwefelung von Kraftstoff, der vom Kraftstofftank 1 über die Entschwefelungseinheit 2 zum Reformer 3 geleitet wird, angeordnet.

Der Adsorber 2a steht mit einer durch das Brennstoffzellensystem 100a betriebenen Hilfsleistungseinheit 4 mit einem Abgasbrenner 4a, 4b mittels einer Regenerationsfluidleitung 12 in Fluidverbindung. Entsprechend ist erhitztes Fluid durch die Regenerationsfluidleitung 12 von der Hilfsleistungseinheit 4 zum Adsorber 2a förderbar.

In einer strichliert dargestellten Variante steht der Adsorber 2a zusätzlich oder stattdessen direkt mit dem Brennstoffzellenstapel in Verbindung, und zwar über die Anodenregenerationsfluidleitung 12a, mit der Anodenabgas vom Brennstoffzellenstapel 5 dem Adsorber 2a zugeführt wird, und über die Kathodenregenerationsfluidleitung 12b, mit der Kathodenabgas vom Brennstoffzellenstapel 5 dem Adsorber 2a zugeführt wird.

Der Abgasbrenner 4a, 4b ist zum Erhitzen des Reformers 3 an diesem bzw. ringförmig um diesen herum angeordnet. Dabei ist der Abgasbrenner 4a, 4b mit einer ersten Abgasbrennereinheit 4a und einer zweiten Abgasbrennereinheit 4b ausgeführt, die strömungstechnisch voneinander getrennt sind und z.B. beide halbringförmig ausgeführt sind. Die erste Abgasbrennereinheit 4a steht ferner mit einem Fluidauslass des Kathodenabschnitts 5b, zum Fördern von kathodenseitigem Abgas in den Abgasbrenner, mittels der Regenerationsfluidleitung 12 in Fluidverbindung.

Bei dem in Fig. 1 dargestellten Brennstoffzellensystem 100a steht der Adsorber 2a außerdem mit einem Fluidauslass des Anodenabschnitts 5a, zum Fördern von anodenseitigem Abgas in den Adsorber 2a, mittels der Regenerationsfluidleitung 12 bzw. der Anodenregenerationsfluidleitung 12a in Fluidverbindung.

Weiterhin ist in der Regenerationsfluidleitung 12 stromabwärts der Hilfsleistungseinheit 4, insbesondere der ersten Abgasbrennereinheit 4a, und stromaufwärts des Adsorbers 2a eine Befeuchtungseinheit 6 zum Befeuchten des erhitzten Fluids, das zum Adsorber gefördert wird, angeordnet. Stromabwärts der Hilfsleistungseinheit 4, insbesondere der ersten Abgasbrennereinheit 4a, sowie stromabwärts der Befeuchtungseinheit 6 und stromaufwärts des Adsorbers 2a ist ein Zusatzbrenner 7 zum weiteren Erhitzen des erhitzten Fluids, das zum Adsorber gefördert wird, angeordnet.

Die Hilfsleistungseinheit 4, insbesondere der zweite Abgasbrenner 4b, ist in einer Abgasfluidleitung 13 zum Auslassen von Abgas des Adsorbers 2a in die Umgebung bzw. zu einem Auslass 10 des Brennstoffzellensystems 100a stromabwärts des Adsorbers 2a angeordnet.

Das Brennstoffzellensystem 100a weist ferner ein Gebläse 8 auf, das zum Spülen des Adsorbers 2a mit diesem in Fluidverbindung steht. Das Gebläse 8 steht außerdem mit einem Vorheizer 9 in Fluidverbindung, der zum Vorheizen des Kathodenabschnitts 5b angeordnet ist und entsprechend mit diesem in Fluidverbindung steht.

Fig. 2 zeigt ein Brennstoffzellensystem 100b gemäß einer zweiten Ausführungsform. Das in Fig. 2 dargestellte Brennstoffzellensystem 100b entspricht im Wesentlichen dem in Fig. 1 dargestellten Brennstoffzellensystem 100a. Zur Vermeidung einer redundanten Beschreibung werden anschließend nur die Unterscheidungsmerkmale zwischen den beiden Ausführungsformen beschrieben.

Das Brennstoffzellensystem 100b gemäß Fig. 2 weist eine Brennkraftmaschine 11 auf. Das dargestellte Brennstoffzellensystem 100b ist als Antriebssystem für ein Hybridelektrofahrzeug ausgestaltet. Gemäß dieser Ausführungsform steht der Adsorber 2a mit der Brennkraftmaschine 11 mittels der Regenerationsfluidleitung 12 in Fluidverbindung, wobei durch die Regenerationsfluidleitung 12 erhitztes Fluid von der Brennkraftmaschine 11 zum Adsorber 2a förderbar ist.

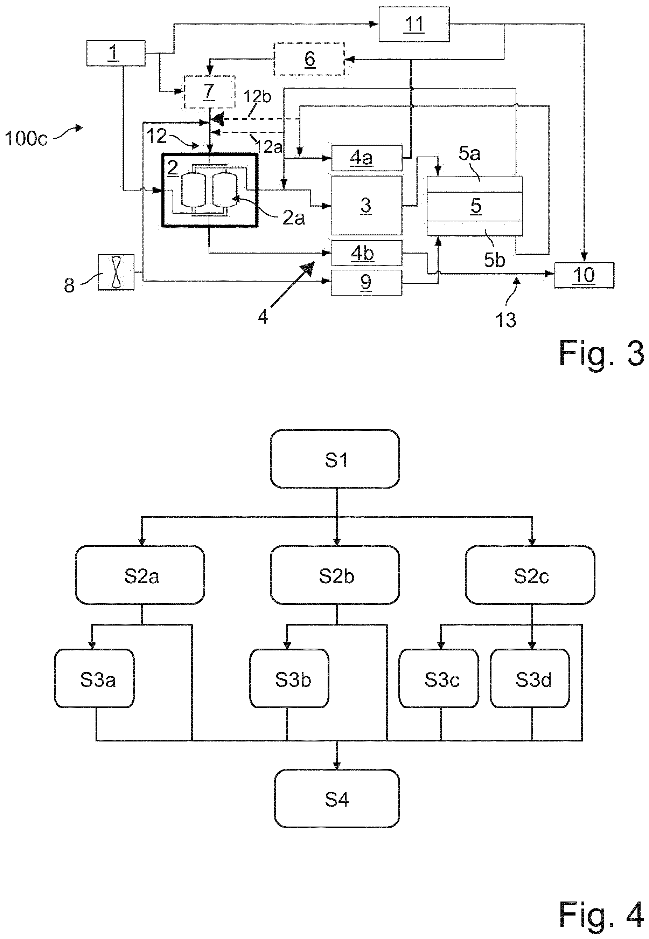

Fig. 3 zeigt ein Brennstoffzellensystem 100c gemäß einer dritten Ausführungsform. Das in Fig. 3 dargestellte Brennstoffzellensystem 100c entspricht im Wesentlichen den in Fig. 1 und Fig. 2 dargestellten Brennstoffzellensystemen 100a, 100b. Zur Vermeidung einer redundanten Beschreibung werden anschließend nur die Unterscheidungsmerkmale zwischen den Ausführungsformen beschrieben.

Das Brennstoffzellensystem 100c gemäß Fig. 3 weist, wie das Brennstoffzellensystem 100b gemäß der zweiten Ausführungsform, eine Brennkraftmaschine 11 auf. Gemäß der dritten Ausführungsform steht der Adsorber 2a mit der Brennkraftmaschine 11 sowie der Hilfsleistungseinheit 4 mittels der Regenerationsfluidleitung 12 in Fluidverbindung, wobei durch die Regenerationsfluidleitung 12 erhitztes Fluid von der Brennkraftmaschine 11 und von der Hilfsleistungseinheit 4 zum Adsorber 2a förderbar ist. Zusätzlich sind strichliert die die Anodenregenerationsfluidleitung 12a und die Kathodenregenerationsfluidleitung 12b dargestellt.

Mit Bezug auf Fig. 4 wird anschließend ein Verfahren zum Durchführen einer thermischen Regeneration von Entschwefelungsadsorbaten, die aus einer adsorptiven Entschwefelung eines Kraftstoffs resultieren, in einem Brennstoffzellensystem 100a gemäß der ersten Ausführungsform beschrieben. Die adsorptive Entschwefelung basiert auf selektiver Interaktion von heterozyklischen Schwefelverbindungen und der Oberfläche des Adsorptionsmittels. Um den Kraftstoff zu entschwefeln, muss dieser lediglich durch den Adsorber mit einem geringen Volumenstrom (Liquid Hourly Space Velocity LHSV bevorzugt kleiner 1,7 h-1) gepumpt werden. Ist das Adsorptionsmittel beladen, d.h., sind beispielsweise 10 ppmw Schwefel am Adsorberausgang erreicht, muss entweder das Adsorptionsmittel getauscht oder regeneriert werden. Für die Regeneration muss der im Adsorber befindliche Kraftstoff entleert werden. Dabei fällt ein Volumen von ca. 0,8 Liter Treibstoff pro Liter Adsorptionsmittel an.

Bei dem anschließend mit Bezug auf Fig. 4 erläuterten Verfahren wird, zur thermischen Regeneration der Entschwefelungsadsorbate, durch die Regenerationsfluidleitung erhitztes Fluid von der Hilfsleistungseinheit 4 zum Aufheizen des Adsorbers 2a zur Entschwefelungseinheit 2 gefördert.

Genauer gesagt wird in einem ersten Schritt S1 zunächst erhitztes Fluid durch die Regenerationsfluidleitung 12 von der Hilfsleistungseinheit 4 in Richtung des Adsorbers 2a gefördert bzw. geleitet, um den Adsorber 2a für die thermische Regeneration der Entschwefelungsadsorbate aufzuheizen. Genauer gesagt wird das erhitzte Fluid durch die Regenerationsfluidleitung 12 vom Abgasbrenner, insbesondere der ersten Abgasbrennereinheit 4a, zum Adsorber 2a geführt.

In einem zweiten Schritt S2a wird ein Aktivitätswert für die Aktivität eines Adorptionsmittels im Adsorber in sauerstoffhaltiger Atmosphäre ermittelt. Wenn festgestellt wird, dass der Aktivitätswert unter einem vordefinierten Schwellenwert liegt, schreitet das Verfahren zu Schritt 3a voran. Dort wird durch die Regenerationsfluidleitung 12 anodenseitiges Abgas in den Abgasbrenner gefördert. Wenn festgestellt wird, dass der Aktivitätswert größer oder gleich dem vordefinierten Schwellenwert ist, schreitet das Verfahren direkt zu Schritt S4 voran.

In einem dem Schritt S1 nachfolgenden Schritt S2b wird ferner ein Feuchtigkeitsgehalt des erhitzten Fluids ermittelt. Wenn in Schritt S2b festgestellt wird, dass der ermittelte Feuchtigkeitsgehalt unter einem vordefinierten Schwellenwert liegt, schreitet das Verfahren zu Schritt S3b voran. Dort wird das erhitzte Fluid stromaufwärts des Adsorbers 2a mittels der Befeuchtungseinheit 6 befeuchtet, bevor es in den Adsorber 2a gefördert wird. Wenn festgestellt wird, dass der ermittelte Feuchtigkeitsgehalt größer oder gleich dem vordefinierten Schwellenwert ist, schreitet das Verfahren direkt zu Schritt S4 voran.

In einem dem Schritt S1 nachfolgenden Schritt S2c wird zudem stromaufwärts des Adsorbers 2a die Temperatur des erhitzten Fluids ermittelt. Wenn in Schritt S2c festgestellt wird, dass die ermittelte Temperatur unter einem vordefinierten ersten Schwellenwert liegt, schreitet das Verfahren zu Schritt S3c voran. Dort wird das erhitzte Fluid stromaufwärts des Adsorbers 2a mittels des Zusatzbrenners 7 weiter erhitzt, bevor es in den Adsorber 2a gefördert wird. Wenn festgestellt wird, dass die ermittelte Temperatur des erhitzten Fluids größer oder gleich als ein vordefinierter zweiter Schwellenwert ist, der größer als der erste vordefinierte Schwellenwert ist, schreitet das Verfahren zu Schritt S3d voran. Dort wird das erhitzte Fluid mit Luft, insbesondere Umgebungsluft, gemischt, um die Temperatur des erhitzten Fluids zu senken (nur mit Bezug auf Fig. 2 dargestellt). Wenn festgestellt wird, dass die ermittelte Temperatur des erhitzten Fluids größer oder gleich dem vordefinierten ersten Schwellenwert und kleiner als der vordefinierte zweite Schwellenwert ist, schreitet das Verfahren direkt zu Schritt S4 voran.

In Schritt S4 wird das erhitzte und ggf. entsprechend nachbehandelte Fluid in den Adsorber 2a geführt.

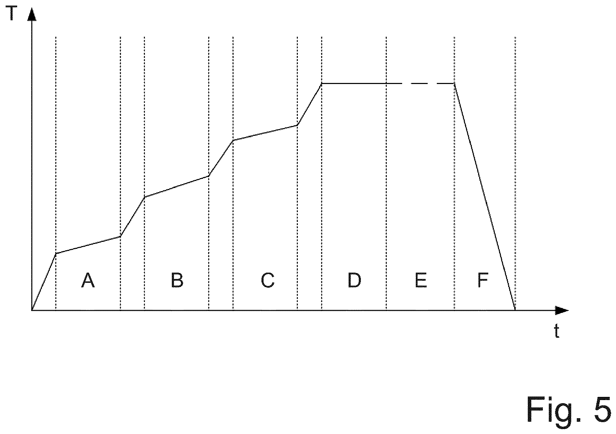

Mit Bezug auf Fig. 5 wird anschließend ein Verfahren gemäß einer weiteren Ausführungsform der Erfindung erläutert, bei welchem insbesondere ein vordefinierter Temperaturverlauf für die Entschwefelung bzw. die Entschwefelung einschließlich der Regeneration dargestellt wird.

Gemäß dem in Fig. 5 dargestellten Verfahren wird das Adsorptionsmittel im Adsorber 2a in einem ersten Schritt A mittels erhitztem Fluid von der Hilfsleistungseinheit 4 und/oder von der Brennkraftmaschine 11 auf eine Temperatur von ca. 150 °C erhitzt.

In einem zweiten Schritt B werden bei einer Temperatur von ca. 300 °C adsorbierte Komponenten des Kraftstoffs zersetzt und verdampft. In diesem Schritt wird ebenfalls noch verbleibender flüssiger Kraftstoff verdampft.

In einem dritten Schritt C werden bei einer Temperatur von ca. 450 °C adsorbierte Komponenten weiter zersetzt und verdampft. Die Schritte B und C können auch in einem einzigen Schritt durchgeführt werden.

In einem vierten Schritt D werden bei einer Temperatur von ca. 525 °C Zwischenprodukte zersetzt und die Regeneration des Adsorptionsmittels eingeleitet. Bei gezielter Zugabe von Wasser bzw. Wasserdampf durch die Befeuchtungseinheit 6 kann die erforderliche Temperatur in Schritt D auf ca. 450°C gesenkt werden.

In einem fünften, optionalen Schritt E wird eine Aktivierung des Adsorptionsmittels unter Verwendung verschiedener Gase, insbesondere eines anodenseitigen Abgases, durchgeführt. Der fünfte Schritt E kann zumindest teilweise zeitgleich mit dem vierten Schritt D durchgeführt werden. Die Temperatur im fünften Schritt E hängt vom verwendeten Adsorptionsmittel ab.

In einem abschließenden sechsten Schritt wird das Adsorptionsmittels und somit auch der Adsorber 2a durch ein Spülen mit Luft auf eine Temperatur von ca. 20 °C abgekühlt, wobei dieser Spülvorgang vorzugsweise indirekt erfolgt, so dass also kein direkter Kontakt von Luft und Adsorber 2a stattfindet.

Neben den dargestellten Ausführungsformen lässt die Erfindung selbstverständlich noch weitere Gestaltungsgrundsätze zu. So kann die wenigstens eine Hilfsleistungseinheit alternativ oder zusätzlich einen Startbrenner und/oder eine andere Wärmequelle aufweisen, die im Brennstoffzellensystem ohnehin betrieben werden und das in Rede stehende erhitzte Fluid erzeugen können.

### Bezugszeichenliste

- 1: Kraftstofftank
- 2: Entschwefelungseinheit
- 2a: Adsorber
- 3: Reformer
- 4: Hilfsleistungseinheit (Abgasbrenner)
- 4a: erste Abgasbrennereinheit
- 4b: zweite Abgasbrennereinheit
- 5: Brennstoffzellenstapel
- 5a: Anodenabschnitt
- 5b: Kathodenabschnitt
- 6: Befeuchtungseinheit
- 7: Zusatzbrenner
- 8: Gebläse
- 9: Vorheizer
- 10: Auslass
- 11: Brennkraftmaschine
- 12: Regenerationsfluidleitung
- 12a: Anodenregenerationsfluidleitung
- 12b: Kathodenregenerationsfluidleitung
- 13: Abgasfluidleitung

- 100a, 100b, 100c: Brennstoffzellensystem

## Patentansprüche

1. Brennstoffzellensystem (100a; 100b; 100c), aufweisend einen Brennstoffzellenstapel (5) mit einem Anodenabschnitt (5a) und einem Kathodenabschnitt (5b), einen Reformer (3) zum Reformieren von Kraftstoff zur Verwendung im Anodenabschnitt (5a) des Brennstoffzellenstapels (5), und einen Kraftstofftank (1) zum Bereitstellen des Kraftstoffs für den Reformer (3), wobei stromabwärts des Kraftstofftanks (1) und stromaufwärts des Reformers (3) eine Entschwefelungseinheit (2) mit einem Adsorber (2a) zur adsorptiven Entschwefelung von Kraftstoff, der vom Kraftstofftank (1) über die Entschwefelungseinheit (2) zum Reformer (3) geleitet wird, angeordnet ist, **dadurch gekennzeichnet, dass** der Adsorber (2a) mit Anoden- (5a) und Kathodenabschnitt (5b) und/oder einer Brennkraftmaschine (11) des Brennstoffzellensystems (100a; 100b; 100c) mittels einer Regenerationsfluidleitung (12) in Fluidverbindung steht, wobei durch die Regenerationsfluidleitung (12) erhitztes Fluid von Anoden- (5a) und Kathodenabschnitt (5b) und/oder von der Brennkraftmaschine (11) zum Adsorber (2a) förderbar ist.

2. Brennstoffzellensystem (100a; 100c) nach Anspruch 1, **dadurch gekennzeichnet, dass** der Adsorber (2a) mit Anoden- (5a) und Kathodenabschnitt (5b) über wenigstens eine durch das Brennstoffzellensystem (100a; 100b; 100c) betriebene Hilfeleistungseinheit (4) mittels einer Regenerationsfluidleitung (12) in Fluidverbindung steht, wobei durch die Regenerationsfluidleitung (12) erhitztes Fluid von Anoden- (5a) und Kathodenabschnitt (5b) über die Hilfsleistungseinheit (4) zum Adsorber (2a) förderbar ist.

3. Brennstoffzellensystem (100a; 100c) nach Anspruch 2, **dadurch gekennzeichnet, dass** die Hilfsleistungseinheit (4) einen Abgasbrenner aufweist, der zum Erhitzen des Reformers (3) an diesem angeordnet ist, wobei der Abgasbrenner, insbesondere eine erste Abgasbrennereinheit (4a), mit dem Adsorber (2a) mittels der Regenerationsfluidleitung (12) in Fluidverbindung steht.

4. Brennstoffzellensystem (100a; 100c) nach Anspruch 3, **dadurch gekennzeichnet, dass** der Abgasbrenner, insbesondere eine erste Abgasbrennereinheit (4a), mit einem Fluidauslass des Kathodenabschnitts (5b), zum Fördern von kathodenseitigem Abgas in den Abgasbrenner, in Fluidverbindung steht.

5. Brennstoffzellensystem (100a; 100b; 100c) nach einem der Ansprüche 2 bis 4, **dadurch gekennzeichnet, dass** der Adsorber (2a) mit einem Fluidauslass des Anodenabschnitts (5a), zum Fördern von anodenseitigem Abgas in den Adsorber (2a), mittels der Regenerationsfluidleitung (12), vorzugsweise der Regenerationsfluidleitung (12) und der Anodenregenerationsfluidleitung (12a), in Fluidverbindung steht.

6. Brennstoffzellensystem (100a; 100b; 100c) nach einem der Ansprüche 2 bis 5, **dadurch gekennzeichnet, dass** in der Regenerationsfluidleitung (12) stromabwärts der Hilfsleistungseinheit (4) und/oder der Brennkraftmaschine (11) und stromaufwärts des Adsorbers (2a) eine Befeuchtungseinheit (6) zum Befeuchten des erhitzten Fluids, das zum Adsorber gefördert wird, angeordnet ist.

7. Brennstoffzellensystem (100a; 100b; 100c) nach einem der Ansprüche 2 bis 6, **dadurch gekennzeichnet, dass** in der Regenerationsfluidleitung (12) stromabwärts der Hilfsleistungseinheit (4) und/oder der Brennkraftmaschine (11), sowie insbesondere stromabwärts der Befeuchtungseinheit (6), und stromaufwärts des Adsorbers (2a) ein Zusatzbrenner (7) zum weiteren Erhitzen des erhitzten Fluids, das zum Adsorber gefördert wird, angeordnet ist.

8. Verfahren zum Durchführen einer thermischen Regeneration von Entschwefelungsadsorbaten, die aus einer adsorptiven Entschwefelung eines Kraftstoffs resultieren, in einem Brennstoffzellensystem (100a; 100b; 100c) nach einem der voranstehenden Ansprüche, **dadurch gekennzeichnet, dass** der Adsorber (2a) mit Anoden- (5a) und Kathodenabschnitt (5b) und/oder einer Brennkraftmaschine (11) des Brennstoffzellensystems (100a; 100b; 100c) mittels einer Regenerationsfluidleitung (12) in Fluidverbindung steht, wobei, zur thermischen Regeneration der Entschwefelungsadsorbate, durch die Regenerationsfluidleitung (12) erhitztes Fluid von Anoden- (5a) und Kathodenabschnitt (5b) und/oder von der Brennkraftmaschine (11) zum Aufheizen des Adsorbers (2a) zum Adsorber (2a) gefördert wird.

9. Verfahren nach Anspruch 8, **dadurch gekennzeichnet, dass** der Adsorber (2a) mit Anoden- (5a) und Kathodenabschnitt (5b) über wenigstens eine durch das Brennstoffzellensystem (100a; 100b; 100c) betriebene Hilfeleistungseinheit (4) mittels einer Regenerationsfluidleitung (12) in Fluidverbindung steht, wobei, zur thermischen Regeneration der Entschwefelungsadsorbate, durch die Regenerationsfluidleitung (12) erhitztes Fluid von Anoden- (5a) und Kathodenabschnitt (5b) über die Hilfsleistungseinheit (4) zum Adsorber (2a) gefördert wird.

10. Verfahren nach Anspruch 9, **dadurch gekennzeichnet, dass** die Hilfsleistungseinheit (4) einen Abgasbrenner aufweist, der zum Erhitzen des Reformers (3) an diesem angeordnet ist, wobei der Abgasbrenner, insbesondere eine erste Abgasbrennereinheit (4a), mit dem Adsorber (2a) mittels der Regenerationsfluidleitung (12) in Fluidverbindung steht und, zur thermischen Regeneration der Entschwefelungsadsorbate, durch die Regenerationsfluidleitung (12) erhitztes Fluid vom Abgasbrenner zum Adsorber (2a) gefördert wird.

11. Verfahren nach einem der Ansprüche 9 bis 10, **dadurch gekennzeichnet, dass** der Adsorber (2a) mit einem Fluidauslass des Anodenabschnitts (5a), zum Fördern von anodenseitigem Abgas in den Adsorber (2a), mittels der Regenerationsfluidleitung (12) in Fluidverbindung steht, wobei ein Aktivitätswert für die Aktivität eines Adorptionsmittels im Adsorber in sauerstoffhaltiger Atmosphäre ermittelt wird und wenn festgestellt wird, dass der Aktivitätswert unter einem vordefinierten Schwellenwert liegt, im Rahmen der thermischen Regeneration der Entschwefelungsadsorbate durch die Regenerationsfluidleitung (12) anodenseitiges Abgas in den Abgasbrenner gefördert wird.

12. Verfahren nach einem der Ansprüche 9 bis 11, **dadurch gekennzeichnet, dass** stromabwärts der Hilfsleistungseinheit (4) und/oder der Brennkraftmaschine (11) und stromaufwärts des Adsorbers (2a) eine Befeuchtungseinheit (6) angeordnet ist, wobei das erhitzte Fluid stromaufwärts des Adsorbers (2a) mittels der Befeuchtungseinheit (6) befeuchtet wird, bevor es in den Adsorber (2a) gefördert wird.

13. Verfahren nach einem der Ansprüche 9 bis 12, **dadurch gekennzeichnet, dass** stromabwärts der Hilfsleistungseinheit (4) und/oder der Brennkraftmaschine (11), sowie insbesondere stromabwärts der Befeuchtungseinheit (6), und stromaufwärts des Adsorbers (2a) ein Zusatzbrenner (7) angeordnet ist, wobei in der Regenerationsfluidleitung (12) stromaufwärts des Adsorbers (2a) die Temperatur des erhitzten Fluids ermittelt wird und wenn festgestellt wird, dass die ermittelte Temperatur des erhitzten Fluids unter einem vordefinierten Schwellenwert liegt, das erhitzte Fluid stromaufwärts des Adsorbers (2a) mittels des Zusatzbrenners (7) weiter erhitzt wird, bevor es in den Adsorber gefördert wird.

14. Verfahren nach einem der Ansprüche 9 bis 13, **dadurch gekennzeichnet, dass** im Rahmen der thermischen Regeneration der Entschwefelungsadsorbate folgende Schritte durchgeführt werden:
- Erhitzen von Adsorptionsmittel im Adsorber (2a) mittels erhitztem Fluid von Anoden- (5a) und Kathodenabschnitt (5b) und/oder der Hilfsleistungseinheit (4) und/oder von der Brennkraftmaschine (11) auf eine erste Temperatur,
- Zersetzen von adsorbierten Komponenten des Kraftstoffs und Verdampfung der zersetzten Komponenten bei einer zweiten Temperatur, die höher als die erste Temperatur ist,
- Zersetzen von Zwischenprodukten und Regeneration des Adsorptionsmittels bei einer dritten Temperatur, die höher als die zweite Temperatur ist, und
- Kühlen des Adsorptionsmittels und/oder des Adsorbers (2a) auf eine vierte Temperatur, die niedriger als die erste Temperatur ist.

15. Kraftfahrzeug mit einem Brennstoffzellensystem nach einem der Ansprüche 1 bis 7, das zum Durchführen eines Verfahrens nach einem der Ansprüche 8 bis 14 konfiguriert und ausgestaltet ist.

## Claims

1. Fuel cell system (100a; 100b; 100c), comprising a fuel cell stack (5) comprising an anode portion (5a) and a cathode portion (5b), a reformer (3) for reforming fuel for use in the anode portion (5a) of the fuel cell stack (5), and a fuel tank (1) for supplying the fuel to the reformer (3), wherein a desulphurisation unit (2) is arranged downstream of the fuel tank (1) and upstream of the reformer (3) and comprises an adsorber (2a) for the adsorptive desulphurisation of fuel guided from the fuel tank (1) to the reformer (3) via the desulphurisation unit (2), **characterised in that** the adsorber (2a) is fluidically connected to the anode (5a) and cathode portion (5b) and/or an internal combustion engine (11) of the fuel cell system (100a; 100b; 100c) by means of a regeneration fluid line (12), wherein heated fluid can be conveyed through the regeneration fluid line (12) from the anode (5a) and cathode portion (5b) and/or from the internal combustion engine (11) to the adsorber (2a).

2. Fuel cell system (100a; 100c) according to claim 1, **characterised in that** the adsorber (2a) is fluidically connected to the anode (5a) and cathode portion (5b) by means of a regeneration fluid line (12) via at least one auxiliary power unit (4) operated by means of the fuel cell system (100a; 100b; 100c), wherein heated fluid can be conveyed through the regeneration fluid line (12) from the anode (5a) and cathode portion (5b) to the adsorber (2a) via the auxiliary power unit (4).

3. Fuel cell system (100a; 100c) according to claim 2, **characterised in that** the auxiliary power unit (4) comprises an exhaust gas burner, which is arranged on the reformer (3) in order to heat same, wherein the exhaust gas burner, in particular a first exhaust gas burner unit (4a), is fluidically connected to the adsorber (2a) by means of the regeneration fluid line (12).

4. Fuel cell system (100a; 100c) according to claim 3, **characterised in that** the exhaust gas burner, in particular a first exhaust gas burner unit (4a), is fluidically connected to a fluid outlet of the cathode portion (5b) in order to convey exhaust gas from the cathode to the exhaust gas burner.

5. Fuel cell system (100a; 100b; 100c) according to any of claims 2 to 4, **characterised in that** the adsorber (2a) is fluidically connected, by means of the regeneration fluid line (12), preferably the regeneration fluid line (12) and the anode regeneration fluid line (12a), to a fluid outlet of the anode portion (5a) in order to convey exhaust gas from the anode to the adsorber (2a).

6. Fuel cell system (100a; 100b; 100c) according to any of claims 2 to 5, **characterised in that** a humidification unit (6) for humidifying the heated fluid conveyed to the adsorber is arranged in the regeneration fluid line (12) downstream of the auxiliary power unit (4) and/or the internal combustion engine (11) and upstream of the adsorber (2a).

7. Fuel cell system (100a; 100b; 100c) according to any of claims 2 to 6, **characterised in that** a supplementary burner (7) for further heating the heated fluid conveyed to the adsorber is arranged in the regeneration fluid line (12) downstream of the auxiliary power unit (4) and/or the internal combustion engine (11), and in particular downstream of the humidification unit (6), and upstream of the adsorber (2a).

8. Method for carrying out thermal regeneration of desulphurisation adsorbates, which result from adsorptive desulphurisation of a fuel, in a fuel cell system (100a; 100b; 100c) according to any of the preceding claims, **characterised in that** the adsorber (2a) is fluidically connected to the anode (5a) and cathode portion (5b) and/or an internal combustion engine (11) of the fuel cell system (100a; 100b; 100c) by means of a regeneration fluid line (12), wherein, for the thermal regeneration of the desulphurisation adsorbates, heated fluid is conveyed through the regeneration fluid line (12) from the anode (5a) and cathode portion (5b) and/or from the internal combustion engine (11) to the adsorber (2a) in order to heat the adsorber (2a).

9. Method according to claim 8, **characterised in that** the adsorber (2a) is fluidically connected to the anode (5a) and cathode portion (5b) by means of a regeneration fluid line (12) via at least one auxiliary power unit (4) operated by means of the fuel cell system (100a; 100b; 100c), wherein, for the thermal regeneration of the desulphurisation adsorbates, heated fluid is conveyed through the regeneration fluid line (12) from the anode (5a) and cathode portion (5b) to the adsorber (2a) via the auxiliary power unit (4).

10. Method according to claim 9, **characterised in that** the auxiliary power unit (4) comprises an exhaust gas burner, which is arranged on the reformer (3) in order to heat same, wherein the exhaust gas burner, in particular a first exhaust gas burner unit (4a), is fluidically connected to the adsorber (2a) by means of the regeneration fluid line (12) and, for the thermal regeneration of the desulphurisation adsorbates, heated fluid is conveyed through the regeneration fluid line (12) from the exhaust gas burner to the adsorber (2a).

11. Method according to any of claims 9 to 10, **characterised in that** the adsorber (2a) is fluidically connected by means of the regeneration fluid line (12) to a fluid outlet of the anode portion (5a) in order to convey exhaust gas from the anode to the adsorber (2a), wherein an activity value is determined for the activity of an adsorbent in the adsorber in an atmosphere containing oxygen and, if it is detected that the activity value is below a predefined threshold value, exhaust gas from the anode is conveyed through the regeneration fluid line (12) to the exhaust gas burner within the scope of the thermal regeneration of the desulphurisation adsorbates.

12. Method according to any of claims 9 to 11, **characterised in that** a humidification unit (6) is arranged downstream of the auxiliary power unit (4) and/or the internal combustion engine (11) and upstream of the adsorber (2a), wherein the heated fluid is humidified upstream of the adsorber (2a) by means of the humidification unit (6) before being conveyed to the adsorber (2a).

13. Method according to any of claims 9 to 12, **characterised in that** a supplementary burner (7) is arranged downstream of the auxiliary power unit (4) and/or the internal combustion engine (11), and in particular downstream of the humidification unit (6), and upstream of the adsorber (2a), wherein the temperature of the heated fluid is determined in the regeneration fluid line (12) upstream of the adsorber (2a) and, if it is detected that the determined temperature of the heated fluid is below a predefined threshold value, the heated fluid is heated further by means of the supplementary burner (7) upstream of the adsorber (2a) before being conveyed to the adsorber.

14. Method according to any of claims 9 to 13, **characterised in that** the following steps are carried out within the scope of the thermal regeneration of the desulphurisation adsorbates:
- heating adsorbent to a first temperature in the adsorber (2a) by means of heated fluid from the anode (5a) and cathode portion (5b) and/or the auxiliary power unit (4) and/or from the internal combustion engine (11),
- decomposing adsorbed fuel components and evaporating the decomposed components at a second temperature, which is higher than the first temperature,
- decomposing intermediate products and regenerating the adsorbent at a third temperature, which is higher than the second temperature, and
- cooling the adsorbent and/or the adsorber (2a) to a fourth temperature, which is lower than the first temperature.

15. Motor vehicle comprising a fuel cell system according to any of claims 1 to 7 that is designed and configured to carry out a method according to any of claims 8 to 14.

## Revendications

1. Système de piles à combustible (100a ; 100b ; 100c), comprenant un empilement de piles à combustible (5) comprenant une partie anode (5a) et une partie cathode (5b), un reformeur (3) pour reformer du combustible destiné à être utilisé dans la partie anode (5a) de l'empilement de piles à combustible (5), et un réservoir de combustible (1) pour alimenter le reformeur (3) en combustible, dans lequel une unité de désulfuration (2) est agencée en aval du réservoir de carburant (1) et en amont du reformeur (3) et comprend un adsorbeur (2a) pour la désulfuration par adsorption de carburant guidé du réservoir de carburant (1) vers le reformeur (3) par l'intermédiaire de l'unité de désulfuration (2), **caractérisé en ce que** l'adsorbeur (2a) est relié fluidiquement à la partie anode (5a) et à la partie cathode (5b) et/ou à un moteur à combustion interne (11) du système de piles à combustible (100a ; 100b ; 100c) au moyen d'une conduite de fluide de régénération (12), dans lequel du fluide chauffé peut être acheminé par la conduite de fluide de régénération (12) de la partie anode (5a) et de la partie cathode (5b) et/ou du moteur à combustion interne (11) vers l'adsorbeur (2a).

2. Système de piles à combustible (100a ; 100c) selon la revendication 1, **caractérisé en ce que** l'adsorbeur (2a) est relié fluidiquement à la partie anode (5a) et à la partie cathode (5b) au moyen d'une conduite de fluide de régénération (12) par l'intermédiaire d'au moins une unité de puissance auxiliaire (4) actionnée au moyen du système de piles à combustible (100a ; 100b ; 100c), dans lequel du fluide chauffé peut être acheminé par la conduite de fluide de régénération (12) de la partie anode (5a) et de la partie cathode (5b) vers l'adsorbeur (2a) par l'intermédiaire de l'unité de puissance auxiliaire (4).

3. Système de piles à combustible (100a ; 100c) selon la revendication 2, **caractérisé en ce que** l'unité de puissance auxiliaire (4) comprend un brûleur de gaz d'échappement, qui est agencé sur le reformeur (3) afin de chauffer celui-ci, dans lequel le brûleur de gaz d'échappement, en particulier une première unité de brûleur de gaz d'échappement (4a), est relié fluidiquement à l'adsorbeur (2a) au moyen de la conduite de fluide de régénération (12).

4. Système de piles à combustible (100a ; 100c) selon la revendication 3, **caractérisé en ce que** le brûleur de gaz d'échappement, en particulier une première unité de brûleur de gaz d'échappement (4a), est relié fluidiquement à une sortie de fluide de la partie cathode (5b) afin d'acheminer du gaz d'échappement de la cathode vers le brûleur de gaz d'échappement.

5. Système de piles à combustible (100a ; 100b ; 100c) selon l'une quelconque des revendications 2 à 4, **caractérisé en ce que** l'adsorbeur (2a) est relié fluidiquement, au moyen de la conduite de fluide de régénération (12), de préférence la conduite de fluide de régénération (12) et la conduite de fluide de régénération de l'anode (12a), à une sortie de fluide de la partie anode (5a) afin d'acheminer du gaz d'échappement de l'anode vers l'adsorbeur (2a).

6. Système de piles à combustible (100a ; 100b ; 100c) selon l'une quelconque des revendications 2 à 5, **caractérisé en ce qu'**une unité d'humidification (6) pour humidifier le fluide chauffé acheminé vers l'adsorbeur est agencée dans la conduite de fluide de régénération (12) en aval de l'unité de puissance auxiliaire (4) et/ou du moteur à combustion interne (11) et en amont de l'adsorbeur (2a).

7. Système de piles à combustible (100a ; 100b ; 100c) selon l'une quelconque des revendications 2 à 6, **caractérisé en ce qu'**un brûleur supplémentaire (7) pour chauffer davantage le fluide chauffé acheminé vers l'adsorbeur est agencé dans la conduite de fluide de régénération (12) en aval de l'unité de puissance auxiliaire (4) et/ou du moteur à combustion interne (11), et en particulier en aval de l'unité d'humidification (6), et en amont de l'adsorbeur (2a).

8. Procédé pour effectuer une régénération thermique d'adsorbats de désulfuration, qui résultent d'une désulfuration par adsorption d'un combustible, dans un système de piles à combustible (100a ; 100b ; 100c) selon l'une quelconque des revendications précédentes, **caractérisé en ce que** l'adsorbeur (2a) est relié fluidiquement à la partie anode (5a) et à la partie cathode (5b) et/ou à un moteur à combustion interne (11) du système de piles à combustible (100a ; 100b ; 100c) au moyen d'une conduite de fluide de régénération (12), dans lequel, pour la régénération thermique des adsorbats de désulfuration, du fluide chauffé est acheminé par la conduite de fluide de régénération (12) de la partie anode (5a) et de la partie cathode (5b) et/ou du moteur à combustion interne (11) vers l'adsorbeur (2a) de manière à chauffer l'adsorbeur (2a).

9. Procédé selon la revendication 8, **caractérisé en ce que** l'adsorbeur (2a) est relié fluidiquement à la partie anode (5a) et à la partie cathode (5b) au moyen d'une conduite de fluide de régénération (12) par l'intermédiaire d'au moins une unité de puissance auxiliaire (4) fonctionnant au moyen du système de piles à combustible (100a ; 100b ; 100c), dans lequel, pour la régénération thermique des adsorbats de désulfuration, du fluide chauffé est acheminé par la conduite de fluide de régénération (12) de la partie anode (5a) et de la partie cathode (5b) vers l'adsorbeur (2a) par l'intermédiaire de l'unité de puissance auxiliaire (4).

10. Procédé selon la revendication 9, **caractérisé en ce que** l'unité de puissance auxiliaire (4) comprend un brûleur de gaz d'échappement, qui est agencé sur le reformeur (3) de manière à chauffer celui-ci, dans lequel le brûleur de gaz d'échappement, en particulier une première unité de brûleur de gaz d'échappement (4a), est relié fluidiquement à l'adsorbeur (2a) au moyen de la conduite de fluide de régénération (12) et, pour la régénération thermique des adsorbats de désulfuration, du fluide chauffé est acheminé par la conduite de fluide de régénération (12) du brûleur de gaz d'échappement vers l'adsorbeur (2a).

11. Procédé selon l'une quelconque des revendications 9 à 10, **caractérisé en ce que** l'adsorbeur (2a) est relié fluidiquement au moyen de la conduite de fluide de régénération (12) à une sortie de fluide de la partie anode (5a) afin d'acheminer du gaz d'échappement de l'anode vers l'adsorbeur (2a), dans lequel une valeur d'activité est déterminée pour l'activité d'un adsorbant dans l'adsorbeur dans une atmosphère contenant de l'oxygène et, s'il est détecté que la valeur d'activité est en dessous d'une valeur seuil prédéfinie, du gaz d'échappement de l'anode est acheminé par la conduite de fluide de régénération (12) vers le brûleur de gaz d'échappement dans le cadre de la régénération thermique des adsorbats de désulfuration.

12. Procédé selon l'une quelconque des revendications 9 à 11, **caractérisé en ce qu'**une unité d'humidification (6) est agencée en aval de l'unité auxiliaire de puissance (4) et/ou du moteur à combustion interne (11) et en amont de l'adsorbeur (2a), dans lequel le fluide chauffé est humidifié en amont de l'adsorbeur (2a) au moyen de l'unité d'humidification (6) avant d'être acheminé vers l'adsorbeur (2a).

13. Procédé selon l'une quelconque des revendications 9 à 12, **caractérisé en ce qu'**un brûleur supplémentaire (7) est agencé en aval de l'unité de puissance auxiliaire (4) et/ou du moteur à combustion interne (11), et en particulier en aval de l'unité d'humidification (6), et en amont de l'adsorbeur (2a), dans lequel la température du fluide chauffé est déterminée dans la conduite de fluide de régénération (12) en amont de l'adsorbeur (2a) et, s'il est détecté que la température déterminée du fluide chauffé est en dessous d'une valeur seuil prédéfinie, le fluide chauffé est chauffé davantage au moyen du brûleur supplémentaire (7) en amont de l'adsorbeur (2a) avant d'être acheminé vers l'adsorbeur.

14. Procédé selon l'une quelconque des revendications 9 à 13, **caractérisé en ce que** les étapes suivantes sont effectuées dans le cadre de la régénération thermique des adsorbats de désulfuration :
- le chauffage d'adsorbant à une première température dans l'adsorbeur (2a) au moyen de fluide chauffé provenant de la partie anode (5a) et de la partie cathode (5b) et/ou de l'unité de puissance auxiliaire (4) et/ou du moteur à combustion interne (11),
- la décomposition de composants de carburant adsorbés et l'évaporation des composants décomposés à une deuxième température, qui est supérieure à la première température,
- la décomposition de produits intermédiaires et la régénération de l'adsorbant à une troisième température, qui est supérieure à la deuxième température, et
- le refroidissement de l'adsorbant et/ou de l'adsorbeur (2a) jusqu'à une quatrième température, qui est inférieure à la première température.

15. Véhicule automobile comprenant un système de piles à combustible selon l'une quelconque des revendications 1 à 7 qui est conçu et configuré pour effectuer un procédé selon l'une quelconque des revendications 8 à 14.
